# EUROPÄISCHE PATENTSCHRIFT

(11) **EP 1 490 728 B1**
(45) Veröffentlichungstag und Bekanntmachung des Hinweises auf die Patenterteilung: **10.08.2005**
(21) Anmeldenummer: 03718707.7
(22) Anmeldetag: 25.03.2003
(51) Int. Cl.: G02F 1/17

(54) **VERFAHREN UND VORRICHTUNG ZUR LICHTMODULATION MITTELS EINES GRANULAREN GASES**
METHOD AND DEVICE FOR LIGHT MODULATION BY GRANULAR GAS
PROCEDE ET DISPOSITIF DE MODULATION DE LA LUMIERE PAR UN GAZ GRANULAIRE

(30) Priorität: 26.03.2002 DE 10213731
(43) Veröffentlichungstag der Anmeldung: 29.12.2004
(73) Patentinhaber: Heidelberg Instruments Mikrotechnik GmbH, D-69126 Heidelberg (DE)
(72) Erfinder: PREUSS, Sven, 69115 Heidelberg (DE)
(74) Vertreter: Schmitt, Meinrad, Dipl.-Ing.
(86) Internationale Anmeldenummer: PCT/EP2003/003073
(87) Internationale Veröffentlichungsnummer: WO 2003/081332

(56) Entgegenhaltungen:
- US-A- 4 215 324
- US-A- 5 280 169
- PATENT ABSTRACTS OF JAPAN vol. 2002, no. 03, 3. April 2002 (2002-04-03) -& JP 2001 312225 A (FUJI XEROX CO LTD), 9. November 2001 (2001-11-09) -& US 6 407 763 B1 (MACHIDA YOSHINORI ET AL) 18. Juni 2002 (2002-06-18)

## Beschreibung

Die Erfindung bezieht sich auf ein Verfahren zur Lichtmodulation gemäß der im Oberbegriff des Patentanspruchs 1 angegebenen Merkmale. Ferner bezieht sich die Erfindung auf eine Vorrichtung zur Durchführung des Verfahrens.

Zur Modulation und Schaltung von Licht wurden unterschiedliche Techniken entwickelt, die jeweils andere physikalische Effekte ausnutzen. Die bekanntesten und wichtigsten Methoden sind Flüssigkristalle, wie Liquid Crystal Displays (LCD) oder Ferroelectric Liquid Crystal Displays (FLCD), Mikrospiegel (einzeln und Matrix), elektro- und akustooptische Modulatoren (Kerr- und Pockelszelle, AOM) sowie elektrophoretische Displays. In elektrophoretischen Displays befinden sich die geladenen Teilchen in einer Suspension, das heißt sie schwimmen in einer elektrisch isolierenden Flüssigkeit. Die Patentschrift US 5 280 169, auf der die Präambeln der Ansprüche 1 und 6 basieren, offenbart einen optischen Begrenzer, in dem geladene Teilchen in Luft zwischen zwei Elektroden bei konstanter Spannung ein granulares Gas bilden.

Der Erfindung liegt die Aufgabe zugrunde, ein Verfahren und eine Vorrichtung vorzuschlagen, um die Lichtmodulation in einfacher Weise und mit einem geringen konstruktiven Aufwand durchführen zu können. Das Verfahren soll eine schnelle und/oder zuverlässig reproduzierbare Modulation des Lichtes ermöglichen und problemlos an unterschiedliche Einsatzbedingungen und Anwendungen anpaßbar sein. Mittels der Vorrichtung soll das Verfahren mit einem geringen Aufwand und wenigen Komponenten realisierbar sein. Ferner soll die Vorrichtung ein geringes Bauvolumen aufweisen sowie eine einfache Integration und Anpassung an vorhandene Systeme ermöglichen. Des Weiteren soll durch das Verfahren bzw. die Vorrichtung die Schaltgeschwindigkeit der Lichtmodulation verbessert werden.

Die Lösung dieser Aufgabe erfolgt hinsichtlich des Verfahrens gemäß der Merkmale des Patentanspruchs 1 und ferner hinsichtlich der Vorrichtung gemäß der Merkmale des Patentanspruchs 6.

Mit dem vorgeschlagenen Verfahren und der vorgeschlagenen Vorrichtung kann das Licht einer beliebigen Quelle und Wellenlänge, insbesondere auch das kohärente, parallele Licht eines Lasers, moduliert, das heißt in seiner Intensität verändert werden. Dazu wird das Licht in die hier beschriebene und im Folgenden auch als "Modulationszelle" bezeichnete Apparatur oder Vorrichtung eingekoppelt. Dieses Einkoppeln kann je nach Lichtquelle und Anwendung eine unterschiedliche Optik erfordern. Gemäß des Verfahrens bewegen sich geladene Teilchen in einem Gas oder auch im Vakuum und erzeugen ein sogenanntes "granulares Gas". Solch ein granulares Gas, welches im wesentlichen eine homogene Wolke aus Pulverteilchen (Nebel) ist, läßt sich auf unterschiedliche Weise erzeugen, zum Beispiel durch Vibration eines Pulvers, durch Einblasen eines Gases in ein Pulver. Erfindungsgemäß wird das granulare Gas durch äußere elektrostatische Kräfte erzeugt, die auf die elektrisch geladenen Pulverteilchen wirken. Innerhalb einer Elektroden enthaltenden Zelle, welche nach außen bevorzugt abgedichtet ist, wird die Lichtintensität durch das kontrollierte granulare Gas moduliert. Das aus der Zelle austretende Licht wird je nach Anwendung durch eine Optik abgebildet. Die Lichtmodulation, insbesondere des kohärenten, parallelen Lichts eines Lasers, erfolgt erfindungsgemäß mittels des kontrollierten granularen Gases.

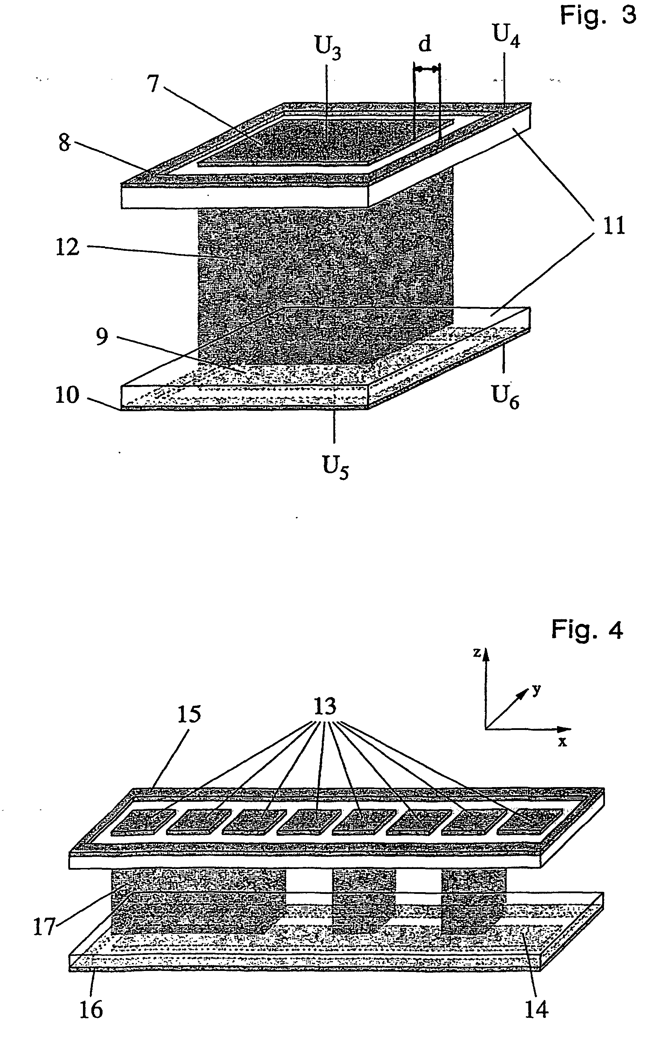

Abhängig vom genauen Aufbau der Modulationszelle können ein einzelnes Lichtbündel, Teile davon oder auch mehrere Lichtbündel parallel moduliert werden. Als Lichtbündel wird dabei das in die Modulationszelle eingestrahlte Licht bezeichnet, welches sowohl ein Laserstrahl als auch das kollimierte und / oder fokusierte Licht einer beliebigen anderen Lichtquelle sein kann. Durch diese Modulation des Lichtes lässt sich die Apparatur zum Beispiel als variabler, schnell schaltbarer Graufilter verwenden, der ein ganzes Lichtbündel oder Teile davon abschwächt. Insbesondere ist es auch möglich, ein ausgedehntes Lichtbündel in Pixel zu unterteilen und diese Pixel einzeln zu modulieren (siehe auch Fig. 4), wodurch ein sogenannter "Spatial Light Modulator" (SLM) realisiert wird.

Die Erfindung wird nachfolgend anhand der in der Zeichnung dargestellten besonderen Ausführungsbeispiele näher erläutert, ohne daß insoweit eine Beschränkung erfolgt.

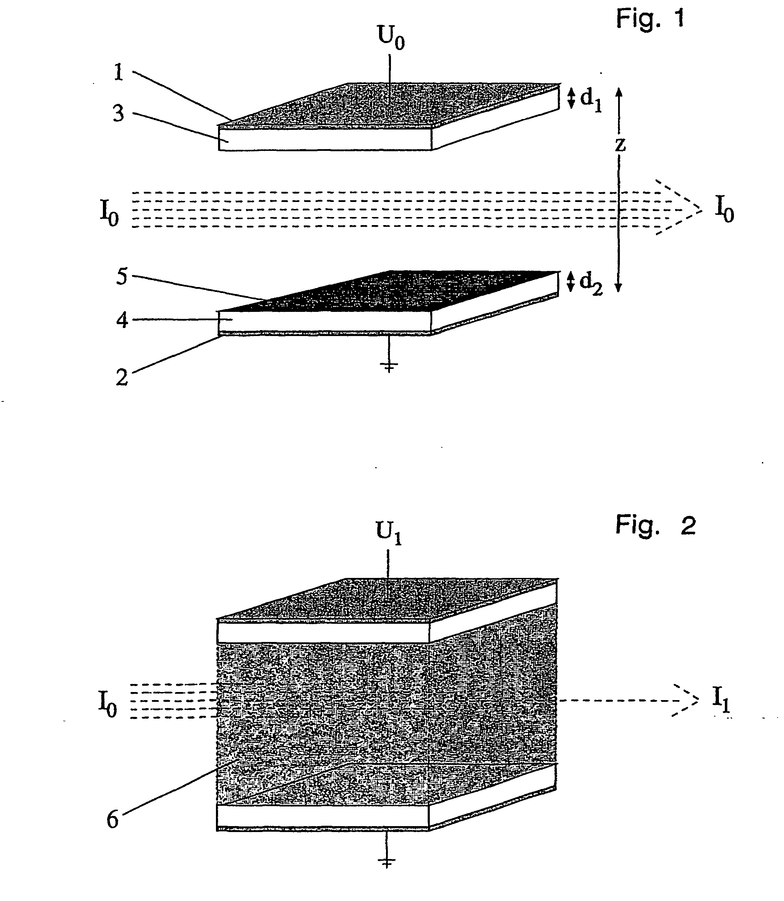

Wie aus Fig. 1 zu ersehen, befinden sich bei der grundlegenden Modulationszelle zwei Elektroden 1, 2 im Abstand z voneinander. Im Zwischenraum der beiden Elektroden 1, 2 befindet sich ein elektrisch geladenes Pulver 5 und ein beliebig dichtes Gas beziehungsweise ein Vakuum. Abhängig von der Art des Pulvers 5 sind die Elektroden 1, 2 mit einer optionalen elektrisch isolierenden Schicht 3, 4 der Dicke d₁ bzw. d₂ überzogen, wie nachfolgend noch erläutert wird. Bei einer angelegten im wesentlichen konstanten Spannung U₀ zwischen den Elektroden 1, 2 haften die Pulverteilchen an den Isolierschichten 3, 4. Das zu modulierende Licht der Intensität I₀ fällt seitlich in die Zelle ein und durchquert diese ungehindert.

Wird nun gemäß Fig. 2 eine geeignete, zeitlich variierende Spannung U₁ zwischen den beiden Elektroden angelegt, so entsteht ein elektrisches Feld (E=U₁/z), welches bei ausreichender Feldstärke die geladenen Pulverteilchen in Bewegung versetzt und sie in Richtung der anderen Elektrode bewegt. Dabei bewegen sich die Teilchen nicht synchron, da sie durch eine unterschiedliche Kraft an den Elektroden haften, das heisst die Pulverteilchen beginnen zu unterschiedlichen Zeitpunkten mit der Bewegung. Bei passender Frequenz der Spannung U₁ bewegen sich die Teilchen zwischen den Elektroden hin und her, wechselwirken miteinander und erzeugen so ein granulares Gas 6. Dabei wirkt durch das elektrische Feld auf die Teilchen die Kraft F=(U₁*Q)/z und die Teilchen erfahren durch diese Kraft eine Beschleunigung a=F/m, wobei Q die Ladung und m die Masse eines Pulverteilchens ist. Für die Frequenz der Spannung U₁ gibt es eine Obergrenze, ab der sich kein homogenes granulares Gas mehr zwischen den Elektroden erzeugen lässt, da die Pulverteilchen zu träge sind und in dem schnell wechselnden elektrischen Feld nur noch einen Bruchteil der Strecke z zurücklegen. Diese Grenzfrequenz ist abhängig vom Abstand der Elektroden z, sowie der Masse und Ladung der Pulverteilchen. Erfindungsgemäß wird die Spannung U₁ mit einer Frequenz kleiner als die Grenzfrequenz vorgegeben. Als Untergrenze der Frequenz gilt diejenige Frequenz, ab welcher die Pulverteilchen in Abhängigkeit insbesondere der vorgenannten Parameter von der einen zur anderen Elektrode hin und her bewegbar sind.

Wird ein granulares Gas erzeugt, wird das einfallende Licht von den Pulverteilchen absorbiert/gestreut und von der einfallenden Intensität I₀ kann nur ein Bruchteil I₁<I₀ die Zelle bzw. Vorrichtung durchqueren. Das Verhältnis von I₁ zu I₀ ist dabei abhängig von der Länge der Strecke, die das Licht durch das granulare Gas zurücklegt, sowie der Dichte und Streu- beziehungsweise Absorptionsfähigkeit des granularen Gases. Der Extinktionskoeffizient des granularen Gases und die Geschwindigkeit, mit der es sich aus den ruhenden Pulverteilchen erzeugen lässt (Schaltgeschwindigkeit), ist insbesondere anderem abhängig von der Stärke und dem zeitlichen Verlauf der angelegten Spannung, sowie dem Material, der Ladung und der Größe der einzelnen Pulverteilchen. Die Schaltgeschwindigkeit erhöht sich dabei mit abnehmender Masse und zunehmender elektrischer Ladung der einzelnen Teilchen, das heißt mit Zunahme des Quotienten aus Ladung und Masse Q/m. Ebenso erhöht sich die Schaltgeschwindigkeit mit der Stärke des elektrischen Feldes zwischen den Elektroden, also mit steigender Spannung U₁ oder sinkendem Abstand z.

Das geladene Pulver ist aufgrund der elektrischen Abstoßungskräfte bestrebt, einen möglichst großen Abstand zwischen die einzelnen Pulverteilchen zu bringen und sich über die Grenzen der Zelle hinaus auszudehnen. Da Teilchen, die sich nicht zwischen den Elektroden befinden, jedoch nicht mehr bewegt werden können, muß diese Ausdehnung verhindert werden. Dies geschieht durch die Wahl des elektrischen Feldes, welches so geformt wird, dass es diese Ausdehnung verhindert.

Ein elektrisches Feld, welches das Pulver auf den Raum zwischen den Elektroden beschränkt, lässt sich durch die Aufteilung der Elektroden 1, 2 gemäß Fig. 2 in mehrere Einzelektroden realisieren, welche sich unabhängig voneinander mit einer Spannung belegen lassen und im Folgenden als Steuer- und Begrenzungselektroden bezeichnet werden. Die Steuerelektroden dienen zur Erzeugung (An- und Abschalten) des granularen Gases, und die Begrenzungselektroden erzeugen eine Potentialbarriere und verhindern, dass die Pulverteilchen die Modulationszelle verlassen. Dabei gibt es eine unüberschaubare Zahl von Möglichkeiten die Form, Zahl und Position der Steuer- und Begrenzungslektroden zu variieren. Die genaue geometrische Anordnung ist abhängig von der Anwendung und der benötigten Lichtmodulation. Insbesondere muß die Geometrie der oberen Elektrode 1 nicht identisch mit der Geometrie der unteren Elektrode 2 sein.

Fig. 3 zeigt als Beispiel die einfachste Zelle dieser Art bei der die obere und untere Elektrode jeweils aus einer Steuer- und einer Begrenzungselektrode bestehen, welche in diesem Fall rechteckig sind, aber wie erwähnt, je nach Anwendung jede beliebige Form haben können (Polygon, Ellipse). Die Elektroden 7 und 8 beziehungsweise 9 und 10 sind durch einen Abstand d getrennt und in diesem Fall sind alle von einer elektrisch isolierenden Schicht 11 bedeckt. Die Steuerelektroden 7, 9 dienen zur Erzeugung des granularen Gases und die äußeren Begrenzungselektroden 8, 10 sorgen dafür, dass die Pulverteilchen 12 die Modulationszelle nicht verlassen können. Ist zum Beispiel das Pulver positiv geladen, wird dies erreicht, indem die Begrenzungselektroden 8, 10 positiv gegenüber den Steuerelektroden 7, 9 geschaltet sind, das heisst U₄>U₃ und U₆ >U₅. Durch passende Wahl der Spannungen U₃₋₆, die zeitlich und untereinander variieren, wird somit ein granulares Gas 12 erzeugt, das im Wesentlichen auf den Raum zwischen den Steuerelektroden 7, 9 beschränkt ist.

Als weiteres Beispiel sei die einfachste Form eines SLM gegeben, das heißt einer Modulationszelle, die aus einer Reihe von einzelnen Pixeln besteht, die unabhängig voneinander Teile eines Lichtbündels modulieren können. Im Rahmen der Erfindung wird eine beliebige oder definierte Anzahl von Zellen wie in Fig. 3 nebeneinander gesetzt und/oder vorgegeben. Ferner ist ein SLM wie in Fig. 4 erfindungsgemäß zu realisieren. Die Zelle besteht in diesem Fall aus acht Pixein (theoretisch aber aus beliebig vielen), die sich über die ersten Steuerelektroden 13 einzeln ein- und ausschalten lassen. Die gemäß Fig. 4 zweite untere Steuerelektrode 14 ist in diesem Fall eine durchgehende Fläche, kann aber je nach Anwendung auch in mehrere Steuerelektroden aufgespalten werden oder geometrisch identisch zur oberen Steuerelektrode ausgebildet sein. Die Begrenzungselektroden 15, 16 dienen wiederum zur Eingrenzung des granularen Gases 17 auf die Zelle. Jede dieser Elektroden kann unabhängig voneinander mit einer Spannung belegt werden, wodurch sich das granulare Gas 17 in jedem Pixel schalten läßt. Dadurch kann das Licht, welches die Zelle in der y-Richtung durchquert, in jedem einzelnen Pixel unabhängig moduliert werden. Je nach Anwendung und gewünschter Lichtmodulation können bei einem solchen SLM auch einige oder alle der Elektroden in y-Richtung unterteilt werden. Ebenso ist der Abstand der Elektroden untereinander und deren geometrische Form von der gewünschten Lichtmodulation abhängig. Infolge der somit in X-Richtung bzw. des Lichtdurchtritts unabhängig von einander vorgegebenen Teilbereiche, in welchen wahlweise granulares Gas vorhanden oder nicht vorhanden ist, ist die Wegstrecke des die granularen Gas-Teilbereiche durchdringenden Lichtes vorgebbar und/oder veränderbar. Erfindungsgemäß wird somit der Modulationsgrad definiert vorgegeben.

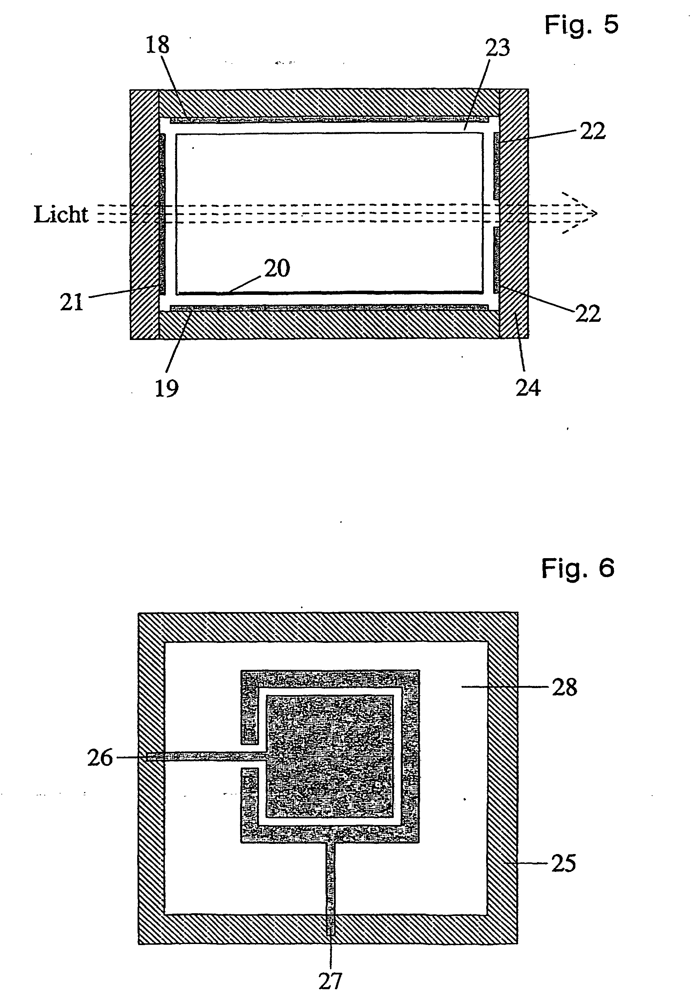

In den bisherigen Beispielen waren die Elektroden auf zwei Ebenen in der vertikalen Richtung beschränkt, dies ist aber nicht notwendigerweise so. Man kann zum Beispiel eine vollkommen gekapselte Modulationzelle bauen, in der die Begrenzungselektroden nicht horizontal, sondern vertikal ausgerichtet sind. In Fig. 5 ist ein Schnitt durch eine solche Zelle dargestellt. Die Steuerelektroden 18, 19 erzeugen das granulare Gas aus dem Pulver 20, und die Begrenzungselektroden 21, 22 verhindern in diesem Fall das Haftenbleiben der Pulverteilchen an den Wänden der Zelle und halten das Pulver zwischen den Steuerelektroden. Alle Elektroden sind von einer elektrisch isolierenden Schicht 23 überzogen. Da das zu modulierende Licht auch bei einer gekapselten Zelle durch den Zwischenraum der Steuerelektroden gelenkt wird, müssen die Begrenzungselektroden entweder transparent 21, z.B. Indium-Zinkoxid (ITO) oder so strukturiert 22 sein, dass das Licht durch sie nicht blockiert wird. Ebenso muss die Isolierschicht 23 und das Substrat 24, auf dem sich die Begrenzungselektrode in diesem Fall befindet, aus einem transparenten Material bestehen. Auch bei der gekapselten Zelle ist die Anzahl und die geometrische Form und Anordnung der Elektroden von der jeweiligen Anwendung abhängig, so dass sich auch SLMs realisieren lassen.

Natürlich lassen sich auch verschiedene oder identische Modulationszellen in Reihe oder parallel schalten, um bestimmte Modulationsergebnisse zu bekommen, insbesondere läßt sich durch das Parallelschalten ein zweidimensionaler SLM realisieren.

Die Dimensionen der Modulationszelle und der Pulverteilchen sind abhängig von der jeweiligen Anwendung, insbesondere von der Schaltgeschwindigkeit, die man erreichen möchte. Je kleiner die Dimensionen, desto schneller lässt sich das granulare Gas schalten und somit das Licht modulieren und desto geringer ist die benötigte Spannung, um das granulare Gas zu erzeugen. Typische Abstände der Elektroden z, in Abbildung 1, liegen im Bereich von 1 mm bis 0,1 mm und typische Spannungen zum Erzeugen des granularen Gases liegen zwischen I000V und 50V. Die geometrischen Dimensionen der Steuer- und Begrenzungselektroden können im Bereich von Mikrometem aber auch Zentimetern liegen und sind abhängig von der gewünschten Lichtmodulation.

Die Modulationszellen lassen sich beispielsweise leicht durch photolithographische Prozesse herstellen, welche besonders geeignet sind, auch kleine Strukturen zu schreiben. Dabei wird gemäß Fig. 6 die Struktur der Elektroden auf einem Substrat, insbesondere einer metallbeschichteten Glasplatte 25 erzeugt. Fig. 6 zeigt eine bevorzugte Möglichkeit, der Realisierung der Modulationszelle gemäß Fig. 3. Die Steuerelektrode 26, (7, 9 in Fig. 3) und die Begrenzungselektrode 27 (8, 10 in Fig. 3) können separat mit einer Spannung versorgt werden. Die optionale, dünne Isolierschicht 28 (11 in Fig. 3) kann gesputtert, aufgedampft oder in Form gelöster Polymere durch spin-coating aufgebracht werden. Zwei derartige Glasplatten 5 werden dann durch einen Spacer separiert und können nach Einbringen eines geladenen Pulvers als Modulationszelle genutzt werden.

Das Material, aus dem das Pulver zwischen den Steuerelektroden besteht, ist prinzipiell beliebig, es kann sich dabei um ein leitendes, halbleitendes oder nicht leitendes Material handeln. Die einzige Bedingung ist, dass die einzelnen Teilchen zur Erzeugung des granularen Gases eine elektrische Überschussladung tragen müssen, da sie sonst nicht bewegt werden können. Die Wahl des Pulvermaterials und der Teilchengrüße ist jedoch wesentlich für die Eigenschaften der Modulationszelle, insbesondere in bezug auf den Extinktionskoeffizienten bei einer bestimmten Wellenlänge und der Geschwindigkeit, mit der das granulare Gas ein- beziehungsweise abgeschaltet werden kann.

Die elektrische Aufladung des Pulvers kann vor Einbringen des Pulvers in die Modulationszelle geschehen, unter bestimmten Bedingungen aber auch in der Zelle direkt. Besteht das Pulver aus einem schlecht- oder nichtleitenden Material, so kann eine der Elektroden unisoliert sein (d₁ oder d₂ gleich Null in Fig. 1), und die Aufladung des Pulvers kann direkt über eine der Steuerelektroden erfolgen. Die Aufladung des schlecht leitenden Pulvers dauert längere Zeit (Minuten bis Stunden), aber die Pulverteilchen halten ihre Ladung auch lange und geben sie nur langsam wieder ab.

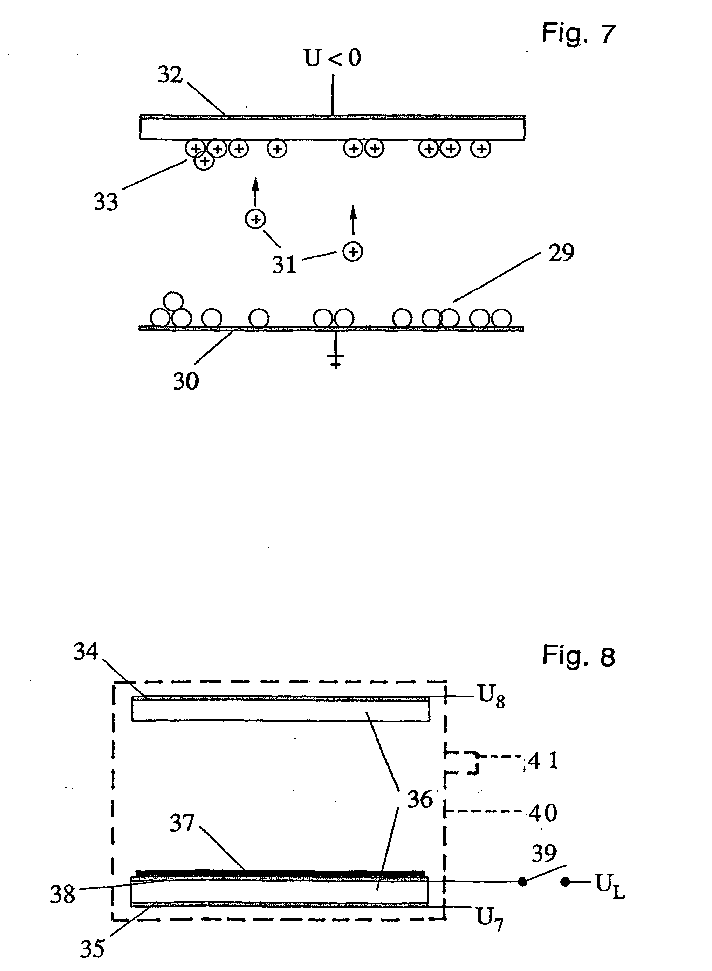

In Fig. 7 ist diese Aufladung schematisch dargestellt. Die Pulverteilchen 29 werden auf der unisolierten Steuerelektrode 30 durch die Spannung U in diesem Beispiel positiv geladen, und sobald sie genügend Ladung aufgenommen haben, bewegen sie sich im elektrischen Feld 31 zur isolierten Elektrode 32 und bleiben dort haften 33. Nach Aufladung des Pulvers kann eine variierende Spannung angelegt und ein granulares Gas erzeugt werden. Da das Pulver schlecht leitend ist, lädt es sich beim Kontakt mit der unisolierten Elektrode nicht um, sondern behält die positive Ladung.

Bei einem leitenden Pulvermaterial funktioniert dieses Verfahren nicht. Es könnte zwar schneller geladen werden, das granulare Gas würde aber aus einem Gemisch von positiv und negativ geladenen Teilchen bestehen, da das Pulver bei Kontakt mit der unisolierten Elektrode sofort die Polarität annimmt, die die Elektrode in diesem Moment besitzt. Ein granulares Gas, das beide Polaritäten enthält, lässt sich jedoch nicht mehr ohne weiteres kontrollieren. Ausserdem besteht bei einem leitenden Pulver und nicht isolierten Elektroden die Gefahr eines elektrischen Durchschlags, welcher die Modulationszelle zerstören würde.

Durch eine zusätzliche Ladungselektrode in der Modulationszelle ist jedoch sowohl bei leitendem und nicht leitendem Pulver eine Aufladung auch später möglich. Die Fig. 8 zeigt den Schnitt durch eine Modulationszelle mit den beiden Steuerelektroden 34, 35, Isolierschichten 36, Pulver 37 und mit zusätzlicher Ladungselektrode 38. Durch das Anlegen der Spannung U_{L} an die Ladungselektrode und einer darauf abgestimmten Spannungen U₇ und U₈ an die Elektroden wird eine elektrische Ladung auf die Ladungselektrode und das Pulver übertragen. Nach der Aufladung wird die Ladungselektrode von der Spannungsquelle isoliert, was zum Beispiel durch ein Relais 39 geschehen kann, so dass das Pulver nicht wieder entladen werden kann. Danach kann die Zelle zur Lichtmodulation genutzt werden. Durch die Ladungselektrode 38 kann die Ladung der Pulverteilchen verändert oder aufgefrischt werden.

Mittels strichpunktierter Linie ist schematisch ein Gehäuse 40 der Vorrichtung angedeutet. Ein derartiges Gehäuse ist erfindungsgemäß auch bei den anderen Ausführungsbeispielen vorgesehen. Das Gehäuse umgibt die vorstehend erläuterten Baukomponenten, wobei das Gehäuse hier nicht weiter dargestellte Durchführungen für elektrische Anschlußleitungen der Elektroden aufweist. Das Gehäuse 40 ist luftdicht, bevorzugt vakuumdicht, ausgebildet, um nachteilige Wechselwirkungen mit der Umgebung auszuschließen, beispielsweise um das Austreten des Gases bzw. des granularen Gases zu vermeiden oder das für die Erzeugung des granularen Gases für eine lange Zeit stabil aufrechtzuerhalten. Ferner kann das Gehäuse 40 einen Anschluss 41 aufweisen für die Zuführung oder Regenerierung des für die Erzeugung des granularen Gases vorgesehenen Gases bzw. zur Erzeugung oder Aufrechterhaltung des genannten Vakuums.

Zumindest in den für den Lichtdurchtritt vorgesehenen Bereichen ist das Gehäuse 40 lichtdurchlässig.

Die Erfindung betrifft ein Verfahren und eine Vorrichtung zur Modulation von Licht durch ein kontrolliertes granulares Gas. Dieses granulare Gas entsteht aus geladenen Pulverteilchen und wird innerhalb einer Modulationszelle durch elektrostatische Kräfte erzeugt und kontrolliert. Die Kräfte werden dabei von einer Anzahl von Elektroden ausgeübt, an die jeweils getrennt eine zeitlich variierende Spannung angelegt wird. Die sogenannten Steuerelektroden dienen zur Erzeugung des granularen Gases und die Begrenzungselektroden verhindern ein Entweichen des Pulvers aus der Modulationszelle. Durch die geometrische Anordnung der Elektroden ist es möglich, die Zelle in einzelne Pixel zu unterteilen, die unabhängig von einander geschaltet werden können. Die räumliche Dimension, sowie die Anzahl und die geometrische Anordnung der Elektroden ist abhängig von der jeweiligen Anwendung und der erwünschten Lichtmodulation. Die elektrische Aufladung der Pulverteilchen geschieht vor dem Einbringen des Pulvers in die Modulationszelle, oder je nach Material des Pulvers, durch eine unisolierte Steuerelektrode oder durch eine zusätzliche, nicht isolierte Elektrode.

### Bezugszeichen

- 1, 2: Elektrode
- 3, 4: elektrisch isolierende Schicht
- 5: elektrisch geladenes Pulver
- 6: granulares Gas
- 7, 9: Steuerelektrode
- 8, 10: Begrenzungselektrode
- 12: Pulverteilchen
- 13: obere bzw. erste Steuerelektrode / Steuerelektroden
- 14: untere bzw. zweite Steuerelektrode/ Steuerelektroden
- 15, 16: Begrenzungselektrode
- 17: granulares Gas
- 18, 19: Steuerelektrode
- 20: elektrisch geladenes Pulver
- 21, 22: Begrenzungselektrode
- 23: Isolierschicht
- 24: Substrat
- 25: Glasplatte
- 26: Steuerelektrode
- 27: Begrenzungselektrode
- 28: Isolierschicht
- 29: Pulverteilchen
- 30: unisolierte Steuerelektrode
- 31: elektrisches Feld
- 32: isolierte Elektrode
- 33: geladene Teilchen
- 34, 35: Steuerelektrode
- 36: Isolierschicht
- 37: Pulver
- 38: zusätzliche Ladungselektrode
- 39: Relais
- 40: Gehäuse
- 41: Anschluss

## Patentansprüche

1. Verfahren zur Lichtmodulation, wobei die Intensität des Lichtes mittels elektrisch geladener Teilchen (5) verändert wird,
wobei ein Gas oder Vakuum vorgesehen wird, in welchem die elektrisch geladenen Teilchen (5) bewegbar sind,
wobei mit dem Gas oder Vakuum und den elektrisch geladenen Teilchen zwischen wenigstens zwei Elektroden (1, 2) ein granulares Gas (6) erzeugt wird,
und wobei das Licht zur Modulation durch das granulare Gas (6) zwischen den Elektroden
(1, 2) geleitet wird, **dadurch gekennzeichnet, dass** das granulare Gas derart erzeugt wird, dass aufgrund einer an den Elektroden anliegenden Spannung, die mit einer vorgegebenen Frequenz zeitlich variiert, die im elektrischen Feld zwischen den Elektroden (1, 2) vorhandenen elektrisch geladenen Teilchen (5) hin und her bewegt werden.

2. Verfahren nach Anspruch 1, **dadurch gekennzeichnet, dass** durch Ändern der an den Elektroden (1, 2) anliegenden Spannung (U₀, U₁), insbesondere zwischen einem unteren Grenzwert der Spannung (U₀), bei welchem die Teilchen (5) im wesentlichen nicht bewegt werden oder im Bereich der einen Elektrode (2) haften, und einem oberen Grenzwert der Spannung (U₁), bis zu welchem das granulare Gas (6) erzeugbar ist, die Lichtmodulation durchgeführt wird.

3. Verfahren nach Anspruch 1 oder 2, **dadurch gekennzeichnet, dass** in Abhängigkeit der Frequenz und/oder der Amplitude der an den Elektroden (1, 2) anliegenden Spannung die Lichtmodulation durchgeführt wird.

4. Verfahren nach einem der Ansprüche 1 bis 3, **dadurch gekennzeichnet, dass** mittels weiterer Begrenzungselektroden (8, 10) der mittels Steuerelektroden (7, 9) vorgegebene Bereich zur Ausbildung des granularen Gases (6) nach außen begrenzt wird, wobei an die Begrenzungselektroden (8, 10) eine Spannung (U₄, U₆,) angelegt wird, und/oder dass mittels des mit den Begrenzungselektroden (8, 10) ein den Bereich des granularen Gases vollständig umgebendes elektrisches Feld derart erzeugt wird, dass die elektrisch geladenen Teilchen (5) und/oder das granulare Gas (6) in dem Bereich zwischen den Steuerelektroden gehalten werden.

5. Verfahren nach einem der Ansprüche 1 bis 4, **dadurch gekennzeichnet, dass** mittels einer vorgegebenen Anzahl von Steuerelektroden (13) unabhängig voneinander Teile des in die den Steuerelektroden (13) zugeordneten Bereiche einfallenden Lichtbündels voneinander moduliert werden.

6. Vorrichtung zur Lichtmodulation, enthaltend wenigstens zwei Elektroden (1, 2) und zwischen den wenigstens zwei Elektroden (1, 2) bewegbare, elektrisch geladene Teilchen, mittels welchen die Intensität von eintretendem Licht veränderbar ist, wobei eine nach außen luftdicht oder vakuumdicht abgeschlossene Modulationszelle vorgesehen ist, in welcher ein Gas oder Vakuum zumindest zwischen den beiden Elektroden (1, 2) vorhanden ist, wobei der Abstand zwischen den Elektroden (1, 2) derart vorgegeben ist, dass durch Anlegen einer vorgegebenen Spannung (U₀) im elektrischen Feld zwischen den Elektroden (1, 2) ein granulares Gas aus den elektrisch geladenen Teilchen und dem Gas oder Vakuum vorhanden ist, und wobei das Licht zur Modulation durch das granulare Gas zwischen den beiden genannten Elektroden (1, 2) geleitet wird, **gekennzeichnet durch** eine Spannungsquelle, die die vorgegebene Spannung so liefert, dass sie mit einer vorgegebenen Frequenz zeitlich variiert.

7. Vorrichtung nach Anspruch 6, **dadurch gekennzeichnet, dass** wenigstens eine, bevorzugt beide Elektroden (1, 2) auf ihrer der jeweils anderen Elektrode zugewandten Seite eine Isolierschicht (3, 4) aufweisen.

8. Vorrichtung nach Anspruch 6, oder 7, **dadurch gekennzeichnet, dass** seitlich der Elektroden (7, 8), zwischen welchen sich das granulare Gas (12) ausbilden kann, Begrenzungselektroden (8, 10) in einem vorgegebenen Abstand (d) angeordnet sind, wobei an die Begrenzungselektroden (8, 10) eine Spannung (U₄, U₆) derart angelegt ist, dass die Teilchen (5) oder das granulare Gas (12) in der mittels der Steuerelektroden (7, 9) gebildeten Modulationszelle gehalten werden.

9. Vorrichtung nach einem der Ansprüche 6 bis 8, **dadurch gekennzeichnet, dass** eine vorgegebene Anzahl voneinander unabhängig mit Spannung beaufschlagbarer Steuerelektroden (13) vorgesehen ist, welchen bevorzugt eine einzige gemeinsame zweite Steuerelektrode (14) gegenüberliegend angeordnet ist.

10. Vorrichtung nach einem der Ansprüche 6 bis 9, **dadurch gekennzeichnet, dass** die Begrenzungselektroden (21, 22), in einem vorgegebenen Winkel, bevorzugt von jeweils 90°, zu den Steuerelektroden (18, 19) angeordnet sind und/oder dass die Begrenzungselektroden (21, 22) den Bereich des granularen Gases seitlich begrenzen und/oder dass die Begrenzungselektroden (21, 22) lichtdurchlässig ausgebildet sind.

11. Vorrichtung nach einem der Ansprüche 6 bis 10, **dadurch gekennzeichnet, dass** wenigstens eine der genannten Elektroden (18 - 20), bevorzugt sämtliche, von einer elektrisch isolierenden Schicht (36) überzogen sind, und zwar auf ihrer dem Bereich des modularen Gases zugewandten Seite.

12. Vorrichtung nach einem der Ansprüche 6 bis 11, **dadurch gekennzeichnet, dass** sie zur Durchführung des Verfahrens nach einem der Ansprüche 1 bis 5 ausgebildet ist.

## Claims

1. A method for light modulation wherein the intensity of the light is modified by means of electrically charged particles (5),
wherein a gas or vacuum is provided in which electrically charged particles (5) can move,
wherein a granular gas (6) is produced with the gas or vacuum and the electrically charged particles between at least two electrodes (1, 2),
and wherein the light for modulation by the granular gas (6) is guided between the electrodes (1, 2), **characterised in that** the granular gas is produced in such a way that as a result of a voltage applied to the electrodes which varies with time at a predetermined frequency, the electrically charged particles (5) present in the electric field between the electrodes (1, 2) are moved to and fro.

2. The method according to claim 1, **characterised in that** the light modulation is carried out by varying the voltage (U₀, U₁) applied to the electrodes (1, 2), especially between a lower voltage limit (U₀) at which the particles are substantially not moved and adhere in the area of one electrode (2) and an upper voltage limit (U₁) up to which the granular gas (6) can be produced.

3. The method according to claim 1 or 2, **characterised in that** the light modulation is carried out depending on the frequency and/or the amplitude of the voltage applied to the electrodes (1, 2).

4. The method according to any one of claims 1 to 3, **characterised in that** the region for the formation of the granular gas (6) predetermined by means of control electrodes (7, 9) is externally delimited by means of further boundary electrodes (8, 10), wherein a voltage (U₄, U₆) is applied to the boundary electrodes (8, 10) and/or that an electric field completely surrounding the region of the granular gas is generated by means of the boundary electrodes (8, 10) so that the electrically charged particles (5) and/or the granular gas (6) are held in the region between the control electrodes.

5. The method according to any one of claims 1 to 4, **characterised in that** parts of the light beam incident in the areas associated with the control electrodes (13) are modulated independently of one another by means of a predetermined number of control electrodes (13).

6. A device for light modulation containing at least two electrodes (1, 2) and electrically charged particles which can move between the at least two electrodes (1, 2) by which means the intensity of incident light can be varied, wherein an externally airtight or vacuum-tight closed modulation cell is provided in which a gas or a vacuum is present at least between the two electrodes (1, 2), wherein the distance between the electrodes (1, 2) is predetermined such that by applying a predetermined voltage (U₀) a granular gas comprising electrically charged particles and the gas or vacuum is present in the electric field between the electrodes (1, 2) and wherein light for modulation by the granular gas is guided between the two said electrodes (1, 2), **characterised by** a voltage source which delivers the predetermined voltage such that it varies with time at a predetermined frequency.

7. The device according to claim 6, **characterised in that** at least one, preferably two electrodes (1, 2) have an insulating layer (3, 4) on their side facing respectively the other electrode.

8. The device according to claim 6 or 7, **characterised in that** at the side of the electrodes (7, 8) between which the granular gas (12) is formed, boundary electrodes (8, 10) are arranged at a predetermined distance (d) wherein a voltage (U₄, U₆) is applied to the boundary electrodes (8, 10) such that the particles (5) or the granular gas (12) are held in the modulation cell formed by means of the control electrodes (7, 9).

9. The device according to any one of claims 6 to 8, **characterised in that** a predetermined number of control electrodes (13) to which voltage can be applied independently is provided which preferably have a single common second control electrode (14) arranged opposite.

10. The device according to any one of claims 6 to 9, **characterised in that** the boundary electrodes (21, 22) are arranged at a predetermined angle, preferably of 90° in each case, to the control electrodes (18, 19) and/or that the boundary electrodes (21, 22) laterally delimit the region of the granular gas and/or that the boundary electrodes (21, 22) are constructed as transparent.

11. The device according to any one of claims 6 to 10, **characterised in that** at least one of said electrodes (18-20), preferably all of said electrodes, is covered with an electrically insulating layer (36) and specifically on their side facing the region of the modular gas.

12. The device according to any one of claims 6 to 11, **characterised in that** it is constructed to implement the method according to any one of claims 1 to 5.

## Revendications

1. Procédé de modulation de lumière,
dans lequel l'intensité de la lumière est modifiée au moyen de particules chargées électriquement (5),
dans lequel il est prévu un gaz ou du vide dans lequel les particules chargées électriquement (5) peuvent se déplacer,
dans lequel, au moyen du gaz ou du vide et des particules chargées électriquement, un gaz granulaire (6) est généré entre au moins deux électrodes (1, 2)
et dans lequel la lumière, pour la moduler, est conduite par le gaz granulaire (6) entre les électrodes (1, 2),
**caractérisé en ce que** le gaz granulaire est généré de manière à ce que, du fait d'une tension appliquée aux électrodes et qui varie dans le temps à une fréquence prédéfinie, les particules chargées électriquement (5) présentes dans le champ électrique ente les électrodes (1, 2) sont déplacées en va et vient.

2. Procédé selon la revendication 1, **caractérisé en ce qu'**on procède à la modulation de la lumière en modifiant la tension (U₀, U₁) appliquée aux électrodes (1, 2), notamment entre une valeur limite inférieure de la tension (U₀) à laquelle les particules (5) ne se déplacent substantiellement pas ou adhèrent au niveau de l'une des électrodes (2) et une valeur limite supérieure de la tension (U₁) jusqu'à laquelle le gaz granulaire (6) peut être généré.

3. Procédé selon la revendication 1 ou 2, **caractérisé en ce qu'**on procède à la modulation de la lumière en fonction de la fréquence et/ou de l'amplitude de la tension appliquée aux électrodes (1, 2).

4. Procédé selon une des revendications 1 à 3, **caractérisé en ce qu'**au moyen d'autres électrodes de limitation (8, 10), on limite vers l'extérieur la zone prédéfinie par les électrodes de commande (7, 9) pour constituer le gaz granulaire (6), tandis qu'une tension (U₄, U₆) est appliquée aux électrodes de limitation (8, 10) et/ou qu'au moyen de celle prédéfinie par les électrodes de limitation (8, 10), on génère un champ électrique entourant totalement la zone du gaz granulaire, de sorte que les particules chargées électriquement (5) et/ou le gaz granulaire (6) sont maintenus dans la zone située entre les électrodes de commande.

5. Procédé selon la revendication 1 à 4, **caractérisé en ce qu'**au moyen d'un nombre prédéfini d'électrodes de commande (13), on module indépendamment les unes des autres des parties du faisceau lumineux incident dans les zones associées aux électrodes de commande (13).

6. Dispositif de modulation de lumière, comportant au moins deux électrodes (1, 2) et des particules chargées électriquement mobiles entre au moins deux électrodes (1, 2), au moyen desquelles on peut modifier l'intensité de lumière incidente, dans lequel il est prévu une cellule de modulation délimitée vers l'extérieur de manière étanche à l'air ou étanche au vide, dans laquelle un gaz est présent du moins entre les deux électrodes (1, 2), la distance entre les électrodes (1, 2) étant prédéfinie de manière à ce qu'en appliquant une tension (U₀) prédéfinie dans le champ électrique entre les électrodes (1, 2), un gaz granulaire issu des particules chargées électriquement et du gaz ou du vide soit disponible et dans lequel la lumière, pour la moduler, est conduite par le gaz granulaire entre les deux électrodes indiquées (1, 2), **caractérisé par** une source de tension qui fournit la tension prédéfinie de manière à ce qu'elle varie dans le temps à une fréquence prédéfinie.

7. Dispositif selon la revendication 6, **caractérisé en ce qu'**au moins une, de préférence les deux électrodes (1, 2) présentent une couche isolante (3, 4) sur leur côté tourné vers l'autre électrode respective.

8. Dispositif selon la revendication 6 ou 7, **caractérisé en ce qu'**à côté des électrodes (7, 8) entre lesquelles le gaz granulaire (12) peut se former, des électrodes de limitation (8, 10) sont disposées à une distance prédéfinie (d), tandis qu'aux électrodes de limitation (8, 10), est appliquée une tension (U₄, U₆) telle que les particules (5) ou le gaz granulaire (12) soient maintenus dans la cellule de modulation constituée au moyen des électrodes de commande (7, 9).

9. Dispositif selon l'une des revendications 6 à 8, **caractérisé en ce qu'**il est prévu un nombre prédéfini d'électrodes de commande (13) pouvant être sollicitées par tension indépendamment les unes des autres, en face desquelles est disposée de préférence une unique deuxième électrode de commande commune (14).

10. Dispositif selon l'une des revendications 6 à 9, **caractérisé en ce que** les électrodes de limitation (21, 22) sont disposées suivant un angle prédéfini, de préférence de 90° respectivement, par rapport aux électrodes de commande (18, 19) et/ou que les électrodes de limitation (21, 22) limitent latéralement la zone du gaz granulaire et/ou que les électrodes de limitation (21, 22) sont conçues de manière à laisser passer la lumière.

11. Dispositif selon l'une des revendications 6 à 10, **caractérisé en ce qu'**au moins une des électrodes indiquées (18-20), de préférence toutes, sont revêtues d'une couche d'isolation électrique (36), à savoir sur leur côté tourné vers la zone du gaz modulaire.

12. Dispositif selon l'une des revendications 6 à 11, **caractérisé en ce qu'**il est conçu pour la réalisation du procédé selon l'une des revendications 1 à 5.
